# EUROPÄISCHE PATENTSCHRIFT

(11) **EP 3 849 741 B1**
(45) Veröffentlichungstag und Bekanntmachung des Hinweises auf die Patenterteilung: **13.03.2024**
(21) Anmeldenummer: 19762364.8
(22) Anmeldetag: 30.08.2019
(51) Int. Cl.: B23Q 3/155, B23Q 3/157

(54) **WERKZEUGMASCHINE**
MACHINE TOOL
MACHINE-OUTIL

(30) Priorität: 10.09.2018 DE 102018121970
(43) Veröffentlichungstag der Anmeldung: 21.07.2021
(73) Patentinhaber: CHIRON Group SE, 78532 Tuttlingen (DE)
(72) Erfinder: EBLE, Michael, 78567 Fridingen (DE); RAFFKE, Karl-Heinz, 78554 Aldingen (DE); KOCH-WEILER, Swenja, 78351 Bodman-Ludwigshafen (DE); BISSERT, Heinrich, 78359 Orsingen-Nenzingen (DE); EPPLER, Claus, 72469 Messstetten (DE); GREF, Robert, 78570 Muehlheim (DE)
(74) Vertreter: Witte, Weller & Partner Patentanwälte mbB
(86) Internationale Anmeldenummer: PCT/EP2019/073258
(87) Internationale Veröffentlichungsnummer: WO 2020/053002

(56) Entgegenhaltungen:
- EP-A1- 2 269 769
- WO-A1-2006/056726
- DE-A1- 3 440 356
- DE-A1- 4 342 630
- DE-A1- 10 236 342
- DE-A1- 19 510 498
- DE-A1- 19 860 709
- DE-A1-102008 014 779
- US-B1- 6 450 932

## Beschreibung

Die vorliegende Erfindung betrifft eine Werkzeugmaschine und ein Verfahren zur vorzugsweise spanabhebenden Bearbeitung von zumindest ersten und davon verschiedenen zweiten Werkstücken, wobei die Werkzeugmaschine zumindest eine Werkzeugspindel und zumindest einen Werkstücktisch aufweist, die relativ zueinander in einer vertikalen Achse und zwei horizontalen Achsen verfahrbar sind, wobei die drei Achsen zueinander orthogonal verlaufen, um mit einem in die Werkzeugspindel eingespannten Werkzeug ein auf dem Werkstücktisch aufgespanntes Werkstück zu bearbeiten, und mit zumindest einem Werkzeugmagazin, in dem ein Werkzeugsatz mit Werkzeugen für die Bearbeitung des Werkstückes vorrätig gehalten wird, die wahlweise in die Werkzeugspindel eingespannt werden können, wobei zumindest ein zweites Werkzeugmagazin vorgesehen ist, aus dem wahlweise Werkzeuge in die Werkzeugspindel eingespannt werden können.

Eine solche Werkzeugmaschine ist aus der WO 2006/056726 A1, der DE 198 60 709 A1, der EP 2 269 769 A1, der DE 43 42 630 A1, der DE 34 40 356 A1 und der der DE 195 10 498 A1 bekannt.

Eine weitere, ähnlich gestaltete Werkzeugmaschine ist aus der DE 102 25 143 A1 bekannt.

Die bekannte Werkzeugmaschine ist eine Fahrständermaschine mit vertikaler Werkzeugspindel, die im Pick-up-Verfahren Werkzeuge mit einem Werkzeugmagazin austauscht, das in einer horizontalen Bewegungsachse mit dem Fahrständer mitfährt und in der anderen horizontalen Bewegungsachse so verfahrbar gelagert ist, dass es mit seiner Werkzeugwechselstelle zum Werkzeugwechsel in den Arbeitsraum hingefahren werden kann.

Da dieses Werkzeugmagazin sozusagen mitfahrend ausgebildet ist, ist die in ihm verfügbare Anzahl an Speicherplätze für Werkzeuge aus dynamischen Gründen begrenzt. Die bekannte Werkzeugmaschine ist daher mit einem Hintergrundmagazin ausgestattet, aus dem auch während der Bearbeitung eines Werkstückes hauptzeitparallel Werkzeuge mit dem Werkzeugmagazin ausgetauscht werden können.

Wenn die bekannte Werkzeugmaschine von der Bearbeitung erster auf die Bearbeitung davon verschiedener zweiter Werkstücke umgerüstet werden muss, werden die Werkzeuge des Werkzeugmagazins und ggf. des Hintergrundmagazins ganz oder teilweise gegen neue Werkzeuge ausgetauscht, wozu die bekannte Werkzeugmaschine stillgesetzt wird. Damit kommt es bei einem derartigen Umrüsten zu einem Produktionsstillstand.

Bei der bekannten Werkzeugmaschine ist neben dem Produktionsstillstand beim Umrüsten auch von Nachteil, dass das mitfahrende Werkzeugmagazin zwar einen schnellen Werkzeugwechsel ermöglicht, aber durch das höhere Gewicht die Dynamik negativ beeinflusst. All dies führt dazu, dass die mit der bekannten Werkzeugmaschine erreichbare Produktivität, also der Durchsatz von bearbeiteten Werkstücken häufig als nicht ausreichend empfunden wird.

Eine aus der EP 2 777 872 A1 bekannte Werkzeugmaschine ist als vertikales Bearbeitungszentrum in Gantry-Bauform ausgebildet, bei dem ein Maschinengestell in Form eines liegenden U einen Arbeitsraum umgreift, in dem eine Vorrichtung zum Einspannen von zu bearbeitenden Werkstücken um eine horizontale Achse schwenkbar gelagert ist. Auf den Seitenwänden des U-förmigen Maschinengestells ist die vertikale Werkzeugspindel gelagert.

Innerhalb des Maschinengestells ist ein Werkzeugmagazin in Kreisform angeordnet, an dem die Werkzeugspindel in Pick-up-Verfahren Werkzeuge wechseln kann.

Unterhalb des Werkzeugmagazins ist ein identisches Werkzeugmagazin vorgesehen, in dem weitere Werkzeuge vorrätig gehalten werden, die mit Hilfe einer an einer Öffnung des Maschinengestells angeordneten Umladevorrichtung zwischen den beiden Werkzeugmagazinen umgeladen werden können, so dass sich die zur Bearbeitung der Werkstücke unmittelbar einsetzbaren Werkzeuge jeweils im oberen Werkzeugmagazin befinden, aus dem sie im Pick-up-Verfahren in die und aus der Werkzeugspindel gewechselt werden.

Das bekannte Bearbeitungszentrum ermöglicht die Bearbeitung vielfältiger Werkstücke mit einer großen Anzahl von Werkzeugen, allerdings ist die Gesamtzahl der verfügbaren Werkzeuge auf die gemeinsame Speicherkapazität der beiden Werkzeugmagazine beschränkt.

Weiter ist von Nachteil, dass das Umladen der Werkzeuge ein zeitaufwändiges Weiterschalten, also Teilen beider Werkzeugmagazine erfordern kann, um Leerstellen und aus- bzw. einzuwechselnde Werkzeuge zu der Umladevorrichtung zu bewegen. Dies reduziert die Produktivität, weil ggf. nach dem Ende der Bearbeitung eines Werkstückes mit einem Werkzeug gewartet werden muss, bis der Umladevorgang abgeschlossen ist, bevor das alte Werkzeug abgelegt und ein neues Werkzeug in die Werkzeugspindel aufgenommen werden kann.

Auch bei dem bekannten Bearbeitungszentrum ist ferner von Nachteil, dass beim Umrüsten von der Bearbeitung erster auf die Bearbeitung zweiter Werkstücke die Werkzeuge beider Werkzeugmagazine ganz oder teilweise gegen neue Werkzeuge ausgetauscht werden müssen, was zu einem Produktionsstillstand führt.

Vor diesem Hintergrund liegt der vorliegenden Erfindung die Aufgabe zugrunde, die eingangs erwähnte Werkzeugmaschine derart weiterzubilden, dass bei geringem konstruktivem Aufwand und auf einfache und preiswerte Weise die Produktivität erhöht wird.

Diese Aufgabe wird bei der bekannten Werkzeugmaschine erfindungsgemäß dadurch gelöst, dass jedes Werkzeugmagazin eine Werkzeugrüststelle aufweist, an der Werkzeuge ausgewechselt werden, um das nicht aktive Werkzeugmagazin ganz oder teilweise mit neuen Werkzeugen für die Bearbeitung eines Werkstückes auszurüsten, dass jedem Werkzeugmagazin eine Ladevorrichtung zugeordnet ist, mit der an der Werkzeugrüststelle Werkzeuge aus einem nicht aktiven Werkzeugmagazin entnommen und/oder Werkzeuge in ein nicht aktives Werkzeugmagazin eingebracht werden, und dass eine gemeinsame Ladevorrichtung für alle Werkzeugmagazine vorgesehen ist.

Vorzugsweise ist jeweils nur ein Werkzeugmagazin aktiv, derart, dass jeweils ausschließlich der Werkzeugsatz aus dem aktiven Werkzeugmagazin für die Bearbeitung eines aufgespannten Werkstückes eingesetzt wird.

Hier ist zunächst von Vorteil, dass die Werkzeuge aus beiden Werkzeugmagazinen unmittelbar und unverzüglich für die Bearbeitung von Werkstücken zur Verfügung stehen, ohne dass Werkzeuge zwischen den beiden Werkzeugmagazinen umgeladen werden müssen. Dies reduziert den konstruktiven Aufwand und erhöht den Durchsatz, weil beispielsweise je nach Bedarf Werkzeuge aus dem einen oder dem anderen Werkzeugmagazin entnommen werden können, wobei z.B. ein Werkzeugmagazin einen Leerplatz zum Ablegen des zuletzt benutzten Werkzeuges und das andere Werkzeugmagazin das neue Werkzeug für den nächsten Bearbeitungsvorgang bereitstellen kann. Beim Werkzeugwechsel muss so nicht gewartet werden, bis das Werkzeugmagazin nach dem Ablegen eines zuvor benutzten Werkzeuges weitergeschaltet hat, um das als nächstes zu benutzende Werkzeug zur Entnahme breitzustellen, was insbesondere bei großen Werkzeugmagazinen mit vielen Speicherplätzen für Werkzeuge Zeit kostet.

Von besonderem Vorteil ist es jedoch, dass erfindungsgemäß die Zeit deutlich verringert wird, die für das Umrüsten von der Bearbeitung erster Werkstücke auf die Bearbeitung zweiter Werkstücke benötigt wird. Während nämlich erste Werkstücke mit Werkzeugen aus dem aktiven Werkzeugmagazin bearbeitet werden, kann zeitgleich das nicht aktive Werkzeugmagazin mit einem Werkzeugsatz für die Bearbeitung der zweiten Werkstücke ausgerüstet werden. Dazu kann es erforderlich sein, alle oder nur einige Werkzeuge an dem nicht aktiven Werkzeugmagazin auszutauschen.

Unmittelbar nach der Bearbeitung des letzten der ersten Werkstücke mit Werkzeugen aus dem aktiven Werkzeugmagazin kann mit der Bearbeitung der zweiten Werkstücke mit den Werkzeugen aus dem bisher nicht aktiven Werkzeugmagazin begonnen werden.

Vor diesem Hintergrund betrifft die vorliegende Erfindung auch ein Verfahren zur Bearbeitung von zumindest ersten und davon verschiedenen zweiten Werkstücken auf einer Werkzeugmaschine, vorzugsweise der neuen Werkzeugmaschine, bei dem erste Werkstücke mit dem Werkzeugsatz aus einem aktiven Werkzeugmagazin bearbeitet werden, während zeitgleich ein nicht aktives Werkzeugmagazin mit einem Werkzeugsatz für die Bearbeitung von zweiten Werkstücken ausgerüstet wird.

Die der Erfindung zugrunde liegende und weitere Aufgaben werden auf diese Weise vollkommen gelöst.

Die Werkzeugmagazine können dabei vorzugsweise nebeneinander oder übereinander angeordnet sein.

Die Anordnung der Werkzeugmagazine richtet sich im Wesentlichen nach den Platzgegebenheiten, wobei eine terrassenförmige Anordnung der Werkzeugmagazine übereinander beim Werkzeugwechsel Zeitvorteile bietet und die Produktivität steigert, wenn wahlweise Werkzeuge aus dem einen oder dem anderen Werkzeugmagazin entnommen werden.

Die terrassenförmige Anordnung bietet zudem konstruktive Vorteile beim Rüsten der Werkzeugmagazine, denn das automatisierte Rüsten kann mit einer gemeinsamen Ladevorrichtung an beiden Werkzeugmagazinen erfolgen.

Dabei ist es bevorzugt, wenn jedes Werkzeugmagazin eine Werkzeugwechselstelle aufweist, und wenn entweder die Werkzeugspindel an der Werkzeugwechselstelle des aktiven Werkzeugmagazins Werkzeuge im Pick-up-Verfahren wechselt, oder ein Werkzeugwechsler vorgesehen ist, der Werkzeuge zwischen der Werkzeugspindel und der Werkzeugwechselstelle des aktiven Werkzeugmagazins wechselt.

Der Werkzeugwechsel im Pick-up-Verfahren ist konstruktiv von Vorteil, denn dafür wird kein Werkzeugwechsler benötigt. Allerdings muss beim Pick-up-Verfahren entweder die Werkzeugwechselstelle in den Arbeitsraum hineinragen oder hineingefahren werden, oder die Werkzeugspindel muss aus dem Arbeitsraum herausfahren.

Weiter ist es bevorzugt, wenn für die Werkzeugwechselstelle zumindest eines Werkzeugmagazins eine Abdeckung vorgesehen ist, die zumindest dann geschlossen ist, wenn das betreffende Werkzeugmagazin nicht aktiv ist.

Hier ist von Vorteil, dass beim Werkzeugwechsel an dem einen Werkzeugmagazin Späne oder Bohrkühlfüssigkeit nicht in das andere Werkzeugmagazin gelangen können. Damit können die Werkzeugwechselstellen der beiden Werkzeugmagazine konstruktiv so angeordnet werden, dass schnelle Werkzeugwechsel möglich werden, was die Produktivität steigert.

Jedes Werkzeugmagazin weist eine Werkzeugrüststelle auf, an der Werkzeuge ausgewechselt werden, um das nicht aktive Werkzeugmagazin ganz oder teilweise mit neuen Werkzeugen für die Bearbeitung eines Werkstückes auszurüsten. Jedem Werkzeugmagazin ist eine Ladevorrichtung zugeordnet, mit der an der Werkzeugrüststelle Werkzeuge aus einem nicht aktiven Werkzeugmagazin entnommen und/oder Werkzeuge in ein nicht aktives Werkzeugmagazin eingebracht werden. Für alle Werkzeugmagazine ist eine gemeinsame Ladevorrichtung vorgesehen.

Hier ist zunächst von Vorteil, dass das gerade nicht aktive Werkzeugmagazin mit einem oder mehreren neuen Werkzeugen ausgerüstet werden kann, ohne dass die Bearbeitung von Werkstücken unterbrochen werden muss, da diese zeitgleich mit den Werkzeugen aus dem aktiven Werkzeugmagazin bearbeitet werden können. Dadurch kann der begrenzten Speicherkapazität der Werkzeugmagazine Rechnung getragen werden. Es stehen sozusagen beliebig viele Werkzeuge zur Verfügung, weil jedes Werkzeugmagazin ohne Bearbeitungszeiteinbuße mit neuen Werkzeugen versehen werden kann.

Von besonderem Vorteil ist es jedoch, dass das nicht aktive Werkzeugmagazin mit einem neuen Werkzeugsatz für die Bearbeitung zweiter Werkstücke versehen werden kann, während zeitgleich erste Werkstücke mit dem Werkzeugsatz aus dem aktiven Werkzeugmagazin bearbeitet werden. Damit kommt es beim Umrüsten von der Bearbeitung erster auf die Bearbeitung zweiter Werkstücke nicht zu einer Produktionsunterbrechung, was folglich die Produktivität steigert.

Dabei ist es bevorzugt, wenn für die Werkzeugrüststelle zumindest eines Werkzeugmagazins eine Abdeckung vorgesehen ist, die zumindest dann geschlossen ist, wenn das betreffende Werkzeugmagazin aktiv ist.

Hier ist von Vorteil, dass beim Rüsten an einem nicht aktiven Werkzeugmagazin nicht Späne oder Bohrkühlfüssigkeit aus dem aktiven Werkzeugmagazin heraus- und in das nicht aktive Werkzeugmagazin hineingelangen oder Bedienungspersonen beschmutzen oder verletzen können. Damit können die Werkzeugrüststellen der beiden Werkzeugmagazine konstruktiv so, beispielsweise terrassenförmig übereinander angeordnet werden, dass ein schnelles Rüsten möglich wird, was konstruktiv von Vorteil ist und die Produktivität steigert.

Die Vorteile der Erfindung können mit Werkzeugmaschinen unterschiedlichster Bauart realisiert werden, so insbesondere mit Fahrständer- und Protalmaschinen. Die Werkzeugspindel kann somit an einem Fahrständer, an dem sie in der vertikalen Achse verfahrbar gelagert ist, wobei der Fahrständer vorzugsweise in zumindest einer der beiden horizontalen Achsen verfahrbar ist, oder an einem Portalbalken angeordnet sein, an dem sie in der vertikalen Achse und ggf. längs einer der beiden horizontalen Achse verfahrbar gelagert ist, die sich parallel zu dem Portalbalken erstreckt.

Der Portalbalken kann in der anderen der beiden horizontalen Achsen verfahrbar sein. Wenn der Portalbalken dagegen nicht verfahrbar ist, ist der Werkstücktisch in der anderen der beiden horizontalen Achsen verfahrbar.

Bei dem neuen Verfahren ist es bevorzugt, wenn während der Bearbeitung von Werkstücken mit Werkzeugen aus einem aktiven Werkzeugmagazin die Abdeckung der Werkzeugwechselstelle des oder jedes nicht aktiven Werkzeugmagazins geschlossen ist, wobei vorzugsweise die Abdeckung der Werkzeugrüststelle des aktiven Werkzeugmagazins geschlossen ist.

Aus den oben dargelegten Gründen wird dadurch die Produktivität der neuen Werkzeugmaschine auf konstruktiv einfache Weise erhöht.

Ausführungsbeispiele der Erfindung sind in der Zeichnung dargestellt und werden in der nachfolgenden Beschreibung näher erläutert. Es zeigen:
- Fig. 1: in schematischer Seitenansicht eine vereinfachte Darstellung einer neuen Werkzeugmaschine in einem ersten Ausführungsbeispiel;
- Fig. 2: in schematischer Vorderansicht eine vereinfachte Darstellung der Werkzeugmaschine aus Fig. 1;
- Fig. 3: in schematischer Vorderansicht eine vereinfachte Darstellung einer neuen Werkzeugmaschine in einem zweiten Ausführungsbeispiel mit nebeneinander angeordneten Werkzeugmagazinen;
- Fig. 4: in schematischer Seitenansicht eine vereinfachte Darstellung der Werkzeugmaschine aus Fig.2. jedoch mit übereinander angeordneten Werkzeugmagazinen: und
- Fig. 5: eine schematische Draufsicht auf die Werkzeugmaschine aus Fig. 3, mit je einem Werkzeugwechsler und einer Ladevorrichtung für jedes der Werkzeugmagazine, wobei eine solche Werkzeugmaschine nicht beansprucht wird.

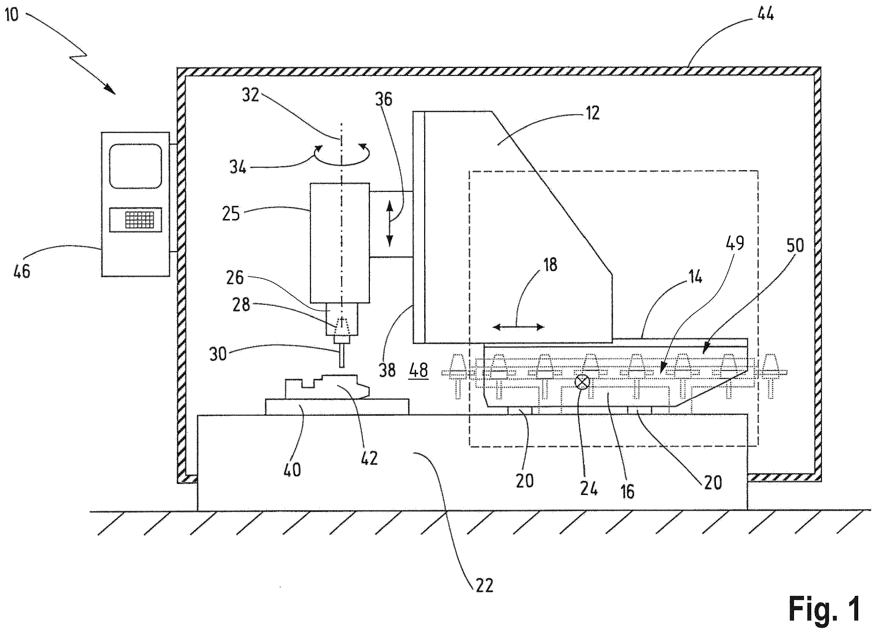

In Fig. 1 ist in einer schematischen und nicht maßstabsgetreuen Seitenansicht eine Werkzeugmaschine dargestellt, die in ihrer Gesamtheit mit der Bezugsziffer 10 bezeichnet ist.

Die Werkzeugmaschine 10 besitzt einen Fahrständer 12, der über eine erste Schlittenführung 14 auf einem Kreuzteil 16 angeordnet ist. Der Fahrständer 12 kann mit Hilfe der ersten Schlittenführung 14 auf dem Kreuzteil 16 in Richtung einer Achse verfahren werden, die üblicherweise als y- Achse bezeichnet wird und hier mit einem Pfeil 18 symbolisch dargestellt ist. Es versteht sich, dass der Fahrständer 12 auf der ersten Schlittenführung 14 motorisch verfahren wird, wobei eine entsprechende Antriebseinheit hier aus Gründen der Übersichtlichkeit nicht dargestellt ist.

Das Kreuzteil 16 ist über eine zweite Schlittenführung 20 auf einem Maschinengestell 22 gelagert. Die zweite Schlittenführung 20 ermöglicht eine Bewegung des Kreuzteils 16 entlang einer zweiten Achse, die hier bei der Bezugsziffer 24 dargestellt ist. Die Bezugsziffer 24 bezeichnet die so genannte X-Achse. Es versteht sich, dass auch die Bewegung des Kreuzteils 16 auf der zweiten Schlittenführung 20 mit Hilfe einer geeigneten Antriebseinheit erfolgt, die hier aus Gründen der Übersichtlichkeit nicht dargestellt ist.

An dem Fahrständer 12 ist ein Spindelkopf 25 mit einer darin drehbar gelagerten Werkzeugspindel 26 vertikal hängend gelagert. Die Werkzeugspindel 26 besitzt an ihrem unteren Ende eine Spindelaufnahme 28, in die in bekannter Weise ein Werkzughalter 29 mit einem daran befestigten Werkzeug 30 eingespannt werden kann. Typischerweise ist der Werkzeughalter standardisiert und vom Steilkegel (SK)- oder Hohlschaftkegel (HSK)-Typ. Die Werkzeugspindel 26 ist dazu ausgebildet, das Werkzeug 30 um ihre Spindelachse 32 zu rotieren, was mit einem Pfeil 34 dargestellt ist. Typischerweise ist die Werkzeugspindel 26 in der Lage, das Bearbeitungswerkzeug 30 mit mehreren tausend Umdrehungen pro Minute zu rotieren, um insbesondere eine Bohr- und Fräsbearbeitung von metallischen Werkstücken zu ermöglichen.

Die Werkzeugspindel 26 kann an dem Fahrständer 12 in Richtung eines Pfeils 36, hier also in vertikaler Richtung, mittels einer ebenfalls nicht gezeigten Antriebseinheit verfahren werden, die als Kugelgewindespindel oder Lineardirektantrieb ausgebildet sein kann. Dementsprechend ist die Werkzeugspindel 26 über eine dritte Schlittenführung 38 an dem Fahrständer 12 gelagert. Die Bewegung der Werkzeugspindel 26 in Richtung des Pfeils 36 wird üblicherweise als Z-Achse bezeichnet. Typischerweise verlaufen die drei Schlittenführungen 14, 20 und 38 für die drei Bewegungsachsen 18, 24, 36 orthogonal zueinander.

Mit der Bezugsziffer 40 ist ein auf dem Maschinengestell gelagerter Werkstücktisch bezeichnet, auf dem ein zu bearbeitendes Werkstück 42 aufgespannt ist. Die Bezugsziffer 44 bezeichnet ein Gehäuse, das die bislang beschriebenen Komponenten der Werkzeugmaschine 10 einschließt. Mit der Bezugsziffer 46 ist schließlich eine Maschinensteuerung bezeichnet, mit deren Hilfe sämtliche Bewegungen der Werkzeugmaschine 10 sowie Hilfsaggregate (Kühlmittelzufuhr, Druckluft sowie das nachfolgend beschriebene Werkzeugmagazin) gesteuert werden.

Die Werkzeugmaschine 10 ist also eine Fahrständermaschine mit vertikaler Werkzeugspindel 26, bei der alle drei Bewegungsachsen 18, 24, 36 in dem Werkzeug 30 realisiert sind. Es ist auch möglich, bei der Werkzeugmaschine aus Fig. 1 eine oder beide der horizontalen Bewegungsachsen 18, 24 in den Werkstücktisch 40 zu verlegen. Statt einer vertikal ausgerichteten Werkzeugspindel 26 kann die neue Werkzeugmaschine 10 zudem auch eine horizontal ausgerichtete Werkzeugspindel aufweisen.

Während der Bearbeitung von Werkstückes 42 kommen unterschiedliche Werkzeuge 30 zum Einsatz, die als Werkzeugsatz 49 in einem in Fig. 1 nur sehr schematisch dargestellten ersten Werkzeugmagazin 50 vorrätig gehalten werden.

Zum Werkzeugwechsel fährt der Fahrständer in y-Richtung 18 nach hinten, in Fig. I also nach rechts. Die Werkzeugspindel 26 befindet sich jetzt oberhalb des Werkzeugmagazins 50, in dem ein Leerplatz vorgesehen ist, in den die Werkzeugspindel 26 nun den Werkzeughalter 29 mit dem bisher im Einsatz gewesenen Werkzeug 30 durch Verfahren in der vertikalen Bewegungsachse 36 ablegt. Dann schaltet das das Werkzeugmagazin 50 weiter und fährt einen bestückten Magazinplatz in die Übergabeposition unter die Werkzeugspindel 26, in dem sich ein Werkzeughalter 29 mit einem jetzt zum Einsatz vorgesehenen Werkzeug 30 befindet.

Alternativ kann der Fahrständer 12 nach dem Ablegen des "alten" Werkzeuges 30 auch einen bestückten Magazinplatz des ersten Werkzeugmagazins 50 anfahren, in dem sich der Werkzeughalter 29 mit dem jetzt zum Einsatz vorgesehenen Werkzeug 30 befindet.

In beiden Fällen nimmt die Werkzeugspindel 12 dann durch erneutes Verfahren in der vertikalen Bewegungsachse 36 ein neues Werkzeug 30 auf. Diese Art des Werkzeugwechsels wird als Pick-up-Verfahren bezeichnet.

Verschieden Werkzeuge 30 können somit nacheinander in einem mit 48 bezeichneten Arbeitsraum verfahren werden, um dort viele erste Werkstück 42 nacheinander mit den Werkzeugen 30 aus dem ersten Werkzeugsatz 49 zu bearbeiten.

Wenn auf der Werkzeugmaschine 10 von den ersten Werkstücken 42 verschiedene zweite Werkstücke 42 bearbeitet werden sollen, werden dazu i.d.R. Werkzeuge 30 benötigt, die zumindest teilweise von den Werkzeugen 30 verschieden sind, mit denen die ersten Werkstücke 42 bearbeitet wurden.

Bei bekannten Werkzeugmaschinen werden dann alle oder einige Werkzeuge 30 des Werkzeugsatzes 49 ausgetauscht, was zu einem längeren Produktionsstillstand an bekannten Werkzeugmaschinen führt, wenn diese von der Bearbeitung erster auf die Bearbeitung zweiter Werkstücke 42 umgerüstet werden.

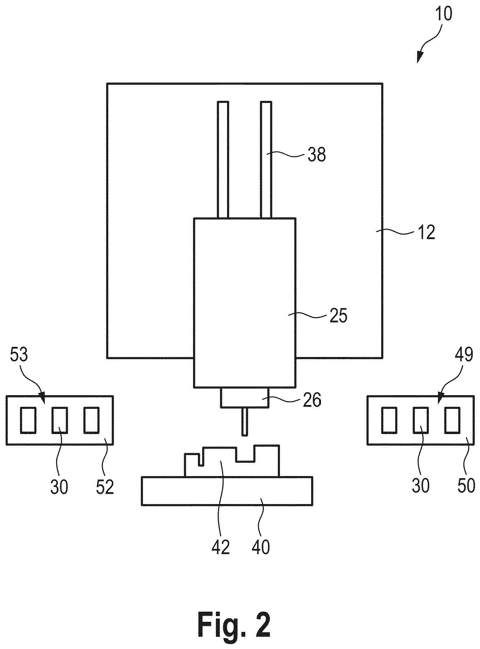

Die Werkzeugmaschine 10 aus Fig. 1 ist daher mit einem zweiten Werkzeugmagazin 52 ausgerüstet, in dem ein zweiter Werkzeugsatz 53 vorrätig gehalten wird, mit dessen Werkzeugen 30 die zweiten Werkstücke 42 bearbeitet werden, wie dies in der schematischen und ausschnittsweisen Vorderansicht der Werkzeugmaschine 10 in Fig. 2 zu sehen ist.

Sobald die Bearbeitung der ersten Werkstücke 42 abgeschlossen ist, kann folglich unmittelbar mit der Bearbeitung der zweiten Werkstücke 42 begonnen werden, weil das zweite Werkzeugmagazine 52 bereits mit einem zweiten Werkzeugsatz 53 bereitsteht.

Das Bestücken oder Ausrüsten des zweiten Werkzeugmagazin 52 mit dem zweiten Werkzeugsatz 53 erfolgt während der Zeitspanne, in der die ersten Werkstücke 42 mit dem ersten Werkzeugsatz 49 aus dem ersten Werkzeugmagazin 50 bearbeitet werden, das während dieser Zeitspanne sozusagen aktiv ist.

Während jetzt die zweiten Werkstücke mit den Werkzeugen 30 aus dem zweiten, nun aktiven Werkzeugmagazin 52 bearbeitet werden, kann der erste Werkzeugsatz 49 in dem ersten, nicht mehr aktiven Werkzeugmagazin 50 erneuert werden. Dies kann einerseits bedeuten, dass sämtliche Werkzeuge 30 des ersten Werkzeugsatzes 49 ausgetauscht werden, oder aber, dass nur einige Werkzeuge 30 ersetzt werden.

Auf diese Weise reduzieren sich die Stillstandzeiten bei der neuen Werkzeugmaschine 10 in erheblichem Umfang, denn das Rüsten des jeweils nicht aktiven Werkzeugmagazins 50, 52 kann bereits während der Bearbeitung von Werkstücken 42 mit Werkzeugen 30 aus dem aktiven Werkzeugmagazin 50,52 erfolgen.

Selbstverständlich ist es möglich, mehr als zwei Werkzeugmagazine 50, 52 in der neuen Werkzeugmaschine 10 vorzusehen.

Wenn für die Bearbeitung eines Werkstückes 40 mehr Werkzeuge 30 benötigt werden, als in einem Werkzeugmagazin 50, 52 gespeichert werden können, so kann auch auf die Werkzeuge aus beiden Werkzeugmagazinen 50, 52 zugegriffen werden.

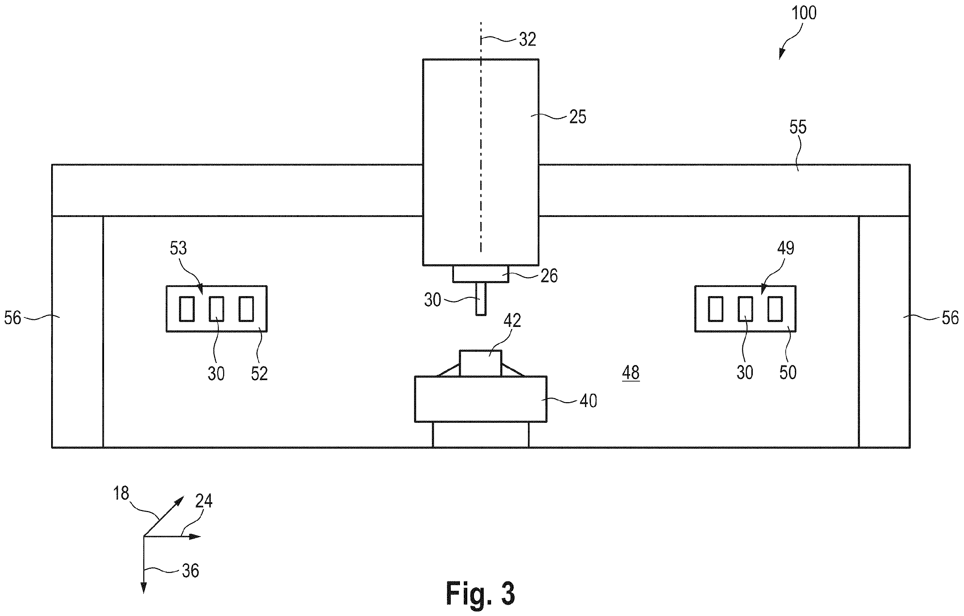

In Figur 3 ist ein weiteres Ausführungsbeispiel der neuen Werkzeugmaschine gezeigt, die mit der Bezugsziffer 100 versehen und als Portalmaschine ausgebildet ist. Für identische Bauteile werden die Bezugszeichen aus den Fig. 1 und 2 eingesetzt.

Die Werkzeugmaschine 100 aus Fig. 3 umfasst einen Portalbalken 55, der auf zwei Wangen 56 angeordnet ist und sich in Richtung der zweiten Bewegungsachse 24 erstreckt. Der Portalbalken 55 ist entweder fest auf den Wangen 56 montiert oder aber in Richtung der ersten Bewegungsachse 18 auf den Wangen 56 verfahrbar gelagert. Wenn der Portalbalken 55 fest auf den Wangen 56 montiert ist, ist die erste Bewegungsachse 18 in dem Werkstücktisch 40 realisiert.

Der Spindelkopf 25 ist in Richtung der vertikalen Bewegungsachse 36 verfahrbar an dem Portalbalken 55 gelagert. Der Spindelkopf 25 ist ferner längs des Portalbalkens 55 in Richtung der zweiten Bewegungsachse 24 verfahrbar, sodass das in der Werkzeugspindel 26 aufgenommene Werkzeug 30 und das Werkstück 42 relativ zueinander in allen drei orthogonalen Raumachsen 18, 24,36, die üblicherweise als X-, Y-und Z-Achse bezeichnet werden, verfahren werden können.

Unterhalb des Portalbalkens 55 sind in dem Arbeitsraum 48 das erste Werkzeugmagazin 50 mit dem ersten Werkzeugsatz 49 sowie das zweite Werkzeugmagazin 52 mit dem zweiten Werkzeugsatz 53 angeordnet.

Wie bei der Werkzeugmaschine 10 aus die Fig. 1 und 2 erfolgte der Werkzeugwechsel auch hier im Pick-ab-Verfahren.

Während das erste Werkzeugmagazin 50 aktiv ist, und mit dem in ihm vorrätig gehaltenen ersten Werkzeugsatz 49 erste Werkstücke 52 bearbeitet werden, kann auch hier wieder der zweite Werkzeugsatz 53 in dem zweiten Werkzeugmagazin 52 erneuert werden.

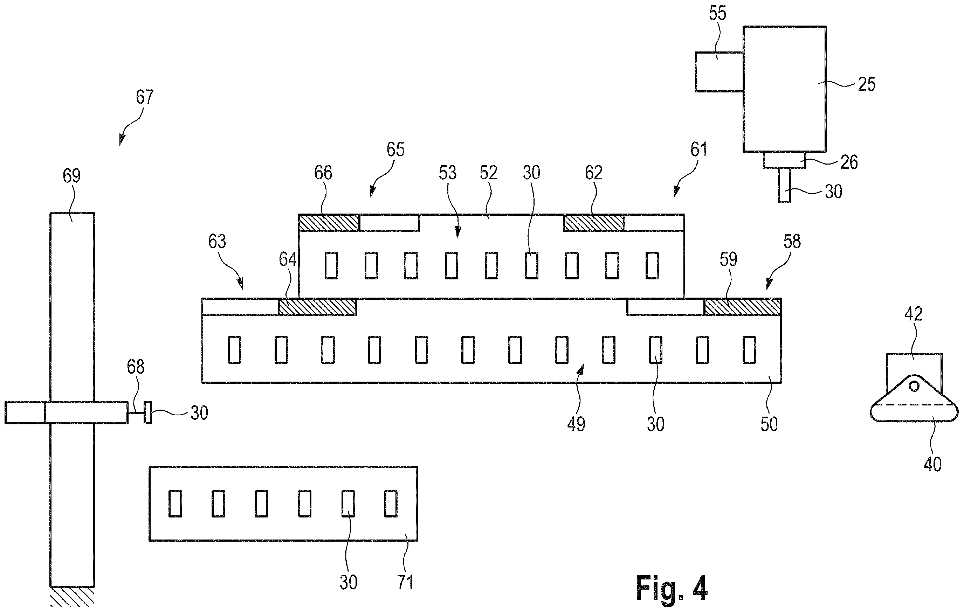

Während in den Fig. 1 bis 3 die Werkzeugmagazine 50,52 nebeneinander angeordnet dargestellt sind, zeigt Fig. 4 die Werkzeugmaschine 100 aus Fig. 3 in einem Ausführungsbeispiel mit übereinander angeordneten Werkzeugmagazinen 50,52.

Als weitere Abweichung gegenüber dem Ausführungsbeispiel der Fig. 3 ist der Werkstücktisch 40 hier als Schwenktisch ausgebildet, der um eine parallel zur zweiten Bewegungsachse 24 liegende Richtung geschwenkt werden kann. Ferner ist es in an sich bekannter Weise auch noch möglich, das Werkstück 42 um eine Hochachse zu rotieren oder bewegen, die parallel zu der vertikalen Bewegungsachse 36 liegt.

Der Werkstückwechsel erfolgt auch bei den beiden terrassenförmig übereinander liegenden Werkzeugmagazinen 50, 52 im Pick-up-Verfahren. Das unten liegende erste Werkzeugmagazin 50 ragt mit seiner Werkzeugwechselstelle 58 unten über das obere Werkzeugmagazin 52 vor, sodass die Werkzeugspindel 26 Werkzeuge 30 sowohl in dem ersten als auch in dem zweiten Werkzeugmagazin 50, 52 ablegen und aus ihm entnehmen kann.

Um die Werkzeuge 30 in dem nicht aktiven ersten Werkzeugmagazin 50 vor dem Eintrag von Verschmutzungen zu schützen, ist an seiner Werkzeugwechselstelle 58 eine Abdeckung 59 vorgesehen, die automatisch geöffnet oder geschlossen werden kann.

In dem gezeigten Ausführungsbeispiel ist das zweite Werkzeugmagazin 52 aktiv, weshalb an seiner Werkzeugwechselstelle 61 die Abdeckung 62 geöffnet ist, sodass die Werkzeugspindel 25 Werkzeuge 30 mit dem zweiten, gerade aktiven Werkzeugmagazin 52 austauschen kann. Die Abdeckung 62 kann während der Bearbeitung der Werkstücke 42 geöffnet bleiben oder aber nach jedem Werkzeugwechsel wieder geschlossen werden.

Das Rüsten der Werkzeugmagazine 50, 52, also das Bestücken der Werkzeugmagazine 50,52 mit einem neuen Werkzeugsatz 49, 53 erfolgt an der Rückseite der Werkzeugmagazine 50, 52, wo diese jeweils eine Werkzeugrüststelle 65, 63 mit Abdeckung 66, 64 aufweisen.

Die Werkzeugwechselstellen 58, 61 und die Werkzeugrüststelle 63, 65 sind durch Öffnungen in Gehäusen der Werkzeugmagazine 50, 52 gebildet, die durch die Abdeckungen 59, 62, 64, 66 verschlossen sind und bei Bedarf freigegeben werden.

Während die Werkzeugrüststelle 65 bei dem aktiven Werkzeugmagazin 52 durch die Abdeckung 66 verschlossen ist, ist die Werkzeugrüststelle 63 bei dem nicht aktiven Werkzeugmagazin 50 geöffnet, die Abdeckung 64 wurde zur Seite geschoben, so dass der Werkzeugsatz 49 erneuert werden kann.

Das untere Werkzeugmagazin 50 ragt auch an der Werkzeugrüststelle 63 unten über das obere Werkzeugmagazin 52 vor. Dennoch ist die Anordnung so getroffen, dass in beiden Werkzeugmagazinen 50, 52 bis zu achtzig Werkzeuge 30 in einem Werkzeugsatz 49, 53 gelagert werden können. In aller Regel sind achtzig Werkzeuge 30 ausreichend, um die Werkstücke 42 zu bearbeiten.

Hinter den terrassenförmig angeordneten Werkzeugmagazinen 50, 52 ist eine Ladevorrichtung 67 vorgesehen, die mittels eines Werkzeuggreifers 68, der an einem Ständer 69 sowohl horizontal als auch vertikal verfahrbar ist, Werkzeuge 30 zwischen dem nicht aktiven Werkzeugmagazin 50 sowie einem Hintergrundmagazin 71 austauscht, das lediglich schematisch dargestellt ist.

Aus dem Hintergrundmagazin 71 kann auf diese Weise der Werkzeugsatz 49, 53 des jeweils nicht aktiven Werkzeugmagazins 50, 52 mit Hilfe der Ladevorrichtung 67 ganz oder teilweise erneuert werden, während der Werkzeugsatz 49, 53 des aktiven Werkzeugmagazins 50, 52 verwendet wird, um Werkstücke 42 zu bearbeiten.

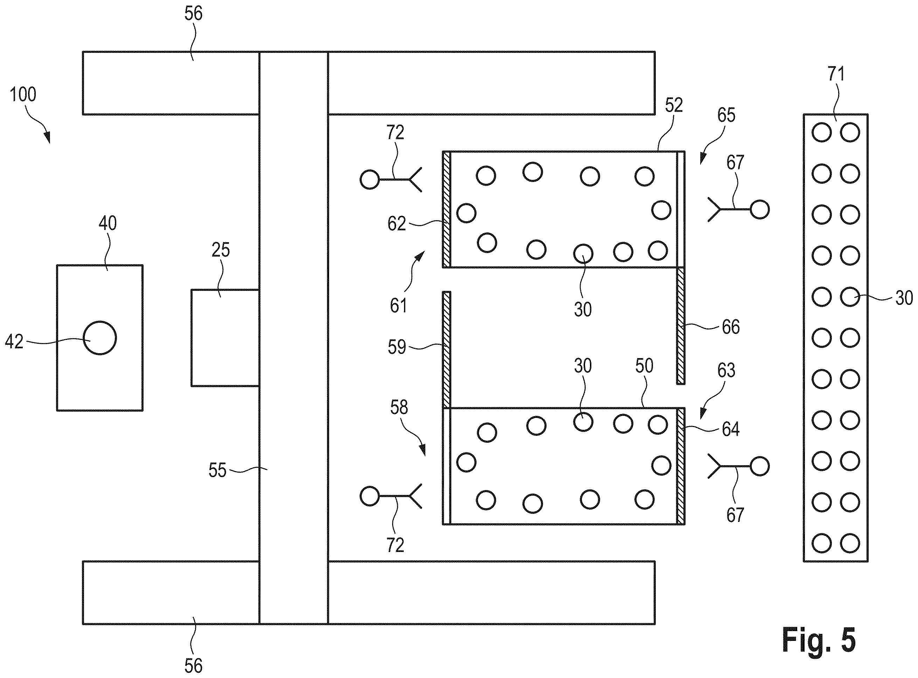

Während in Fig. 4 erfindungsgemäß eine gemeinsame Ladevorrichtung 67 für beide Werkzeugmagazine 50,
52 vorgesehen ist, kann auch für jedes Werkzeugmagazin 50, 52 eine eigene Ladevorrichtung 67 vorgesehen sein, wie dies in Fig. 5 dargestellt ist, die eine schematische Draufsicht auf die Werkzeugmaschine 100 aus Fig. 3 zeigt, wobei eine solche Werkzeugmaschine nicht beansprucht wird.

Die Werkzeugmagazine 50, 52 sind übrigens Kettenmagazine mit im Kreis umlaufenden Werkzeugen 30, was in Fig. 5 schematisch angedeutet ist.

In Abweichung von Fig. 3 erfolgt der Werkzeugwechsel zur Werkzeugspindel 26 hier ebenfalls über Werkzeugwechsler 72, wobei für jedes Werkzeugmagazin 50, 52 ein Werkzeugwechsler 72 vorgesehen ist. Der Werkzeugwechsler 72 ist lediglich schematisch dargestellt. Er kann wie die Ladevorrichtung 67 einen Werkzeuggreifer umfassen, der über eine geeignete Mechanik zwischen der Werkzeugwechselstelle 58, 61 an dem jeweiligen Werkzeugmagazin 50, 52 und einer Wechselposition verfährt, in der er ein aufgenommenes Werkzeug 30 der Werkzeugspindel 26 anbietet bzw. von ihr ein gebrauchtes Werkzeug 30 aufnimmt, um es in dem Werkzeugmagazin 50, 52 abzulegen.

In dem in Fig. 5 gezeigten Bearbeitungszustand ist das Werkzeugmagazin 50 aktiv, die Werkzeugrüststelle 63 ist verschlossen und die Werkzeugwechselstelle 58 geöffnet. Bei dem nicht aktiven Werkzeugmagazin 52 ist die Werkzeugwechselstelle 61 geschlossen und die Werkzeugrüststelle 65 geöffnet.

Während bei den Werkzeugmagazinen 50, 52 aus Fig. 4 der Werkzeugwechsel sozusagen von oben erfolgt, die Abdeckungen 59, 62, 64, 66 also oben auf dem Gehäuse der Werkzeugmagazine 50, 52 aufliegen, erfolgt der Werkzeugwechsel gemäß Fig. 5 über die Stirnseiten der Gehäuse.

## Patentansprüche

1. Werkzeugmaschine zur Bearbeitung von Werkstücken (42), mit zumindest einer Werkzeugspindel (26) und zumindest einem Werkstücktisch (40), die relativ zueinander in einer vertikalen Achse (36) und zwei horizontalen Achsen (18, 24) verfahrbar sind, wobei die drei Achsen (36, 18, 24) zueinander orthogonal verlaufen, um mit einem in die Werkzeugspindel (26) eingespannten Werkzeug (30) ein auf dem Werkstücktisch (40) aufgespanntes Werkstück (42) zu bearbeiten, und mit zumindest einem Werkzeugmagazin (50, 52), in dem ein Werkzeugsatz (49, 53) mit Werkzeugen (30) für die Bearbeitung des Werkstückes (42) vorrätig gehalten wird, die wahlweise in die Werkzeugspindel (26) eingespannt werden können, wobei zumindest ein zweites Werkzeugmagazin (50, 52) vorgesehen ist, aus dem wahlweise Werkzeuge (30) in die Werkzeugspindel (26) eingespannt werden können,
**dadurch gekennzeichnet, dass** jedes Werkzeugmagazin (50, 52) eine Werkzeugrüststelle (63, 65) aufweist, an der Werkzeuge (30) ausgewechselt werden, um ein nicht aktives Werkzeugmagazin (50, 52) ganz oder teilweise mit neuen Werkzeugen (30) für die Bearbeitung eines Werkstückes (42) auszurüsten,
dass eine gemeinsame Ladevorrichtung (67) für alle Werkzeugmagazine (50, 52) vorgesehen ist,
mit der an der Werkzeugrüststelle (63, 65) Werkzeuge (30) aus einem nicht aktiven Werkzeugmagazin (50, 52) entnommen und/oder Werkzeuge (30) in ein nicht aktives Werkzeugmagazin (50, 52) eingebracht werden.

2. Werkzeugmaschine nach Anspruch 1, **dadurch gekennzeichnet, dass** jeweils nur ein Werkzeugmagazin (50, 52) aktiv ist, derart, dass jeweils ausschließlich der Werkzeugsatz (49, 53) aus dem aktiven Werkzeugmagazin (50, 52) für die Bearbeitung eines aufgespannten Werkstückes (42) eingesetzt wird.

3. Werkzeugmaschine nach Anspruch 1 oder 2, **dadurch gekennzeichnet, dass** die Werkzeugmagazine (50, 52) nebeneinander angeordnet sind.

4. Werkzeugmaschine nach Anspruch 1 oder 2, **dadurch gekennzeichnet, dass** die Werkzeugmagazine (50, 52) übereinander angeordnet sind.

5. Werkzeugmaschine nach einem der Ansprüche 1 bis 4, **dadurch gekennzeichnet, dass** jedes Werkzeugmagazin (50, 52) eine Werkzeugwechselstelle (58, 61) aufweist, und dass die Werkzeugspindel (26) an der Werkzeugwechselstelle (58, 61) des aktiven Werkzeugmagazins (50, 52) Werkzeuge (30) im Pick-up-Verfahren wechselt.

6. Werkzeugmaschine nach einem der Ansprüche 1 bis 4, **dadurch gekennzeichnet, dass** jedes Werkzeugmagazin (50, 52) eine Werkzeugwechselstelle (58, 61) aufweist, und dass ein Werkzeugwechsler (72) vorgesehen ist, der Werkzeuge (30) zwischen der Werkzeugspindel (26) und der Werkzeugwechselstelle (58, 61) des aktiven Werkzeugmagazins (50, 52) wechselt.

7. Werkzeugmaschine nach einem der Ansprüche 5 bis 6, **dadurch gekennzeichnet,**
**dass** für die Werkzeugwechselstelle (58, 61) zumindest eines Werkzeugmagazins (50, 52) eine Abdeckung (59, 62) vorgesehen ist, die zumindest dann geschlossen ist, wenn das betreffende Werkzeugmagazin (50, 52) nicht aktiv ist.

8. Werkzeugmaschine nach Anspruch 1, **dadurch gekennzeichnet, dass** für die Werkzeugrüststelle (63, 65) zumindest eines Werkzeugmagazins (50, 52) eine Abdeckung (64, 66) vorgesehen ist, die zumindest dann geschlossen ist, wenn das betreffende Werkzeugmagazin (50, 52) aktiv ist.

9. Werkzeugmaschine nach einem der vorherigen Ansprüche, **dadurch gekennzeichnet, dass** die Werkzeugspindel (26) an einem Fahrständer (12) angeordnet ist, an dem sie in der vertikalen Achse (36) verfahrbar gelagert ist, wobei der Fahrständer (12) vorzugsweise in zumindest einer der beiden horizontalen Achsen (18, 24) verfahrbar ist.

10. Werkzeugmaschine nach einem der Ansprüche 1-8, **dadurch gekennzeichnet, dass** die Werkzeugspindel (26) an einem Portalbalken (55) angeordnet ist, an dem sie in der vertikalen Achse (36) und ggf. längs einer der beiden horizontalen Achse (18, 24) verfahrbar gelagert ist, die sich parallel zu dem Portalbalken (55) erstreckt.

11. Werkzeugmaschine nach Anspruch 10, **dadurch gekennzeichnet, dass** der Portalbalken (55) in der anderen der beiden horizontalen Achsen (18, 24) verfahrbar ist.

12. Werkzeugmaschine nach Anspruch 10, **dadurch gekennzeichnet, dass** der Portalbalken (55) nicht verfahrbar ist, und dass der Werkstücktisch (40) in der anderen der beiden horizontalen Achsen (18, 24) verfahrbar ist.

13. Verfahren zur Bearbeitung von zumindest ersten und davon verschiedenen zweiten Werkstücken (42) auf einer Werkzeugmaschine nach einem der Ansprüche 1-12, **dadurch gekennzeichnet, dass** erste Werkstücke (42) mit dem Werkzeugsatz (49, 53) aus einem aktiven Werkzeugmagazin (50, 52) bearbeitet werden, während zeitgleich ein nicht aktives Werkzeugmagazin (50, 52) mit einem Werkzeugsatz (49, 53) für die Bearbeitung von zweiten Werkstücken (42) ausgerüstet wird.

14. Verfahren nach Anspruch 13, **dadurch gekennzeichnet, dass** während der Bearbeitung von Werkstücken (42) mit Werkzeugen (30) aus einem aktiven Werkzeugmagazin (50, 52) die Abdeckung der Werkzeugwechselstelle (58, 61) des oder jedes nicht aktiven Werkzeugmagazins (50, 52) geschlossen ist.

15. Verfahren nach Anspruch 13 oder 14, **dadurch gekennzeichnet, dass** während der Bearbeitung von Werkstücken (42) mit Werkzeugen (30) aus einem aktiven Werkzeugmagazin (50, 52) die Abdeckung der Werkzeugrüststelle (63, 65) des aktiven Werkzeugmagazins (50, 52) geschlossen ist.

## Claims

1. A machine tool for machining workpieces (42), comprising at least one tool spindle (26) and at least one workpiece table (40), which can be moved relative to one another along a vertical axis (36) and two horizontal axes (18, 24), wherein the three axes (36, 18, 24) are orthogonally to one another, in order to machine a workpiece (42) that is clamped on the workpiece table (40) with a tool (30) that is clamped in the tool spindle (26), and at least one tool magazine (50, 52), in which a tool set (49, 53) with tools (30) for machining the workpiece (42) is kept in stock, which tools can be selectively clamped in the tool spindle (26),
wherein at least one second tool magazine (50, 52) is provided, from which tools (30) can be selectively clamped in the tool spindle (26),
**characterized in that**
each tool magazine (50, 52) has a tool fitting site (63, 65), at which tools (30) are exchanged in order to equip a non-active tool magazine (50, 52) completely or partially with new tools (30) for machining a workpiece (42),
a common loading device (67) is provided for all tool magazines (50, 52), by means of which tools (30) are removed from a non-active tool magazine (50, 52) and/or tools (30) are inserted into a non-active tool magazine (50, 52) at the tool fitting site (63, 65).

2. The machine tool according to claim 1, **characterized in that** only one tool magazine (50, 52) is active in each case, in such a way that only the tool set (49, 53) from the active tool magazine (50, 52) is used in each case for machining a clamped workpiece (42).

3. The machine tool according to claim 1 or 2, **characterized in that** the tool magazines (50, 52) are arranged next to one another.

4. The machine tool according to claim 1 or 2, **characterized in that** the tool magazines (50, 52) are arranged one above the other.

5. The machine tool according to one of claims 1 to 4, **characterized in that** each tool magazine (50, 52) has a tool change site (58, 61), and **in that** the tool spindle (26) changes tools (30) at the tool change site (58, 61) of the active tool magazine (50, 52) in accordance with the pick-up method.

6. The machine tool according to one of claims 1 to 4, **characterized in that** each tool magazine (50, 52) has a tool change site (58, 61), and **in that** a tool changer (72) is provided, which changes tools (30) between the tool spindle (26) and the tool change site (58, 61) of the active tool magazine (50, 52).

7. The machine tool according to one of claims 5 to 6, **characterized in that** a cover (59, 62) is provided for the tool change site (58, 61) of at least one tool magazine (50, 52), which cover is closed at least when the respective tool magazine (50, 52) is not active.

8. The machine tool according to claim 1, **characterized in that** a cover (64, 66) is provided for the tool fitting site (63, 65) of at least one tool magazine (50, 52), which cover is closed at least when the respective tool magazine (50, 52) is active.

9. The machine tool according to one of the preceding claims, **characterized in that** the tool spindle (26) is arranged on a travelling column (12), on which the tool spindle (26) is mounted so as to be movable along the vertical axis (36), wherein the travelling column (12) is preferably movable in at least one of the two horizontal axes (18, 24).

10. The machine tool according to one of claims 1-8, **characterized in that** the tool spindle (26) is arranged on a portal beam (55), on which the tool spindle (26) is mounted so as to be movable in the vertical axis (36) and, if appropriate, along one of the two horizontal axes (18, 24), which extends parallel to the portal beam (55).

11. The machine tool according to claim 10, **characterized in that** the portal beam (55) is movable in the other of the two horizontal axes (18, 24).

12. The machine tool according to claim 10, **characterized in that** the portal beam (55) is not movable, and **in that** the workpiece table (40) is movable in the other of the two horizontal axes (18, 24).

13. A method for machining at least first workpieces (42) and second workpieces (42), that are different therefrom, on a machine tool according to one of claims 1-12, **characterized in that** first workpieces (42) are machined with the tool set (49, 53) from an active tool magazine (50, 52), while at the same time a non-active tool magazine (50, 52) is being equipped with a tool set (49, 53) for machining second workpieces (42).

14. The method according to claim 13, **characterized in that** during the machining of workpieces (42) with tools (30) from an active tool magazine (50, 52), the cover of the tool change site (58, 61) of the or each non-active tool magazine (50, 52) is closed.

15. The method according to claim 13 or 14, **characterized in that** during the machining of workpieces (42) with tools (30) from an active tool magazine (50, 52), the cover of the tool fitting site (63, 65) of the active tool magazine (50, 52) is closed.

## Revendications

1. Machine-outil pour l'usinage de pièces (42), comprenant au moins une broche porte-outil (26) et au moins une table porte-pièce (40) qui sont déplaçables l'une par rapport à l'autre selon un axe vertical (36) et deux axes horizontaux (18, 24), les trois axes (36, 18, 24) étant orthogonaux les uns par rapport aux autres, afin d'usiner, avec un outil (30) serré dans la broche porte-outil (26), une pièce (42) serrée sur la table porte-pièce (40), et avec au moins un magasin d'outils (50, 52) dans lequel est conservé en réserve un jeu d'outils (49, 53) avec des outils (30) pour l'usinage de la pièce (42), qui sont aptes à être serrés au choix dans la broche porte-outils (26), au moins un deuxième magasin d'outils (50, 52) étant prévu, à partir duquel des outils (30) sont aptes à être serrés au choix dans la broche porte-outils (26),
**caractérisée en ce que** chaque magasin d'outils (50, 52) présente un poste de changement d'outils (63, 65) au niveau duquel des outils (30) sont changés pour équiper entièrement ou partiellement un magasin d'outils (50, 52) non actif avec de nouveaux outils (30) pour l'usinage d'une pièce (42), **en ce qu'**il est prévu un dispositif de chargement (67) commun à tous les magasins d'outils (50, 52), avec lequel des outils (30) sont prélevés d'un magasin d'outils (50, 52) non actif et/ou des outils (30) sont introduits dans un magasin d'outils (50, 52) non actif au niveau du poste d'équipement en outils (63, 65).

2. Machine-outil selon la revendication 1, **caractérisée en ce qu'**un seul magasin d'outils (50, 52) est actif à la fois, de telle sorte que seul le jeu d'outils (49, 53) du magasin d'outils actif (50, 52) est utilisé pour l'usinage d'une pièce serrée (42) à la fois.

3. Machine-outil selon la revendication 1 ou 2, **caractérisée en ce que** les magasins d'outils (50, 52) sont agencés les uns à côté des autres.

4. Machine-outil selon la revendication 1 ou 2, **caractérisée en ce que** les magasins d'outils (50, 52) sont agencés les uns au-dessus des autres.

5. Machine-outil selon l'une des revendications 1 à 4, **caractérisée en ce que** chaque magasin d'outils (50, 52) présente un point de changement d'outils (58, 61), et **en ce que** la broche porte-outils (26) change des outils (30) au point de changement d'outils (58, 61) du magasin d'outils actif (50, 52) selon un procédé « pick-up ».

6. Machine-outil selon l'une des revendications 1 à 4, **caractérisée en ce que** chaque magasin d'outils (50, 52) présente un point de changement d'outils (58, 61), et **en ce qu'**il est prévu un changeur d'outils (72) qui change les outils (30) entre la broche porte-outils (26) et le point de changement d'outils (58, 61) du magasin d'outils actif (50, 52).

7. Machine-outil selon l'une des revendications 5 à 6, **caractérisée en ce que** pour le point de changement d'outil (58, 61) d'au moins un magasin d'outils (50, 52), il est prévu un couvercle (59, 62) qui est fermé au moins lorsque le magasin d'outils (50, 52) concerné n'est pas actif.

8. Machine-outil selon la revendication 1, **caractérisée en ce qu'**un couvercle (64, 66) est prévu pour l'emplacement d'outil (63, 65) d'au moins un magasin d'outils (50, 52), lequel est fermé au moins lorsque le magasin d'outils (50, 52) concerné est actif.

9. Machine-outil selon l'une des revendications précédentes, **caractérisée en ce que** la broche porte-outil (26) est agencée sur une colonne mobile (12) sur laquelle elle est montée mobile selon l'axe vertical (36), la colonne mobile (12) étant de préférence mobile selon au moins un des deux axes horizontaux (18, 24).

10. Machine-outil selon l'une des revendications 1 à 8, **caractérisée en ce que** la broche porte-outil (26) est agencée sur une poutre-portique (55) sur lequel elle est montée mobile selon l'axe vertical (36) et optionnellement selon l'un des deux axes horizontaux (18, 24) qui s'étend parallèlement à la poutre-portique (55).

11. Machine-outil selon la revendication 10, **caractérisée en ce que** la poutre-portique (55) est déplaçable selon l'autre des deux axes horizontaux (18, 24).

12. Machine-outil selon la revendication 10, **caractérisée en ce que** la poutre-portique (55) n'est pas mobile et **en ce que** la table porte-pièce (40) est déplaçable selon l'autre des deux axes horizontaux (18, 24).

13. Procédé d'usinage d'au moins des premières et des deuxièmes pièces (42) différentes sur une machine-outil selon l'une des revendications 1 à 12, **caractérisé en ce que** les premières pièces (42) sont usinées avec le jeu d'outils (49, 53) provenant d'un magasin d'outils actif (50, 52), tandis que, simultanément, un magasin d'outils non actif (50, 52) est équipé d'un jeu d'outils (49, 53) pour l'usinage des deuxièmes pièces (42).

14. Procédé selon la revendication 13, **caractérisé en ce que**, pendant l'usinage de pièces (42) avec des outils (30) provenant d'un magasin d'outils actif (50, 52), le couvercle du point de changement d'outil (58, 61) du ou de chaque magasin d'outils non actif (50, 52) est fermé.

15. Procédé selon la revendication 13 ou 14, **caractérisé en ce que**, pendant l'usinage de pièces (42) avec des outils (30) provenant d'un magasin d'outils actif (50, 52), le couvercle du point de changement d'outil (63, 65) du magasin d'outils actif (50, 52) est fermé.
